# EUROPÄISCHE PATENTSCHRIFT

(11) **EP 0 647 885 B1**
(45) Veröffentlichungstag und Bekanntmachung des Hinweises auf die Patenterteilung: **28.07.1999**
(21) Anmeldenummer: 94115366.0
(22) Anmeldetag: 29.09.1994
(51) Int. Cl.: G03G 7/00, G03G 9/09, B41M 1/34, C04B 41/81, C03C 17/04

(54) **Dekorierte Keramik- und Glaserzeugnisse, Verfahren zu deren Herstellung und keramische Farbzusammensetzungen zur Durchführung des Verfahrens**
Decorated ceramic and glass products, process for their manufacture, and coloured ceramic compositions to be used in this process
Objets céramiques et vitreux décorés, procédé de leur fabrication, et compositions colorées céramiques, à utiliser dans ce procédé

(30) Priorität: 07.10.1993 DE 4334239; 15.04.1994 DE 4413168
(43) Veröffentlichungstag der Anmeldung: 12.04.1995
(73) Patentinhaber: Zimmer, Michael, D-66399 Mandelbachtal (DE)
(72) Erfinder: Zimmer, Michael, D-66399 Mandelbachtal (DE)
(74) Vertreter: Kindler, Matthias, Dr. Dipl.-Chem.

(56) Entgegenhaltungen:
- DE-A- 4 041 358
- DE-C- 71 497
- DATABASE WPI Section Ch, Week 7451, Derwent Publications Ltd., London, GB; Class G05, AN 74-87732V & JP-A-035 407 (NORITAKE) 2. April 1974
- PATENT ABSTRACTS OF JAPAN vol. 9, no. 48 (P-338) (1771) 28. Februar 1985 & JP-A-59 187 353 (MINOLTA) 24. Oktober 1984
- PATENT ABSTRACTS OF JAPAN vol. 7, no. 87 (P-190) (1232) 12. April 1983 & JP-A-58 014 141 (RICOH) 26. Januar 1983
- PATENT ABSTRACTS OF JAPAN vol. 12, no. 422 (P-783) (3269) 9. November 1988 & JP-A-63 157 167 (FUJI) 30. Juni 1988

## Beschreibung

Die Erfindung betrifft ein Verfahren zur Herstellung von dekorierten Keramik- und Glaserzeugnissen, nach diesem Verfahren erhältliche, dekorierte Keramik- und Glaserzeugnisse sowie keramische Farbzusammensetzungen zur Durchführung des Verfahrens.

Bei den bekannten Verfahren der eingangs genannten Gattung werden keramische Buntdrucke mittels des Siebdruckverfahrens und in seltenen Fällen auch mittels des Offsetdruckverfahrens auf ein Keramik- oder Glaserzeugnis aufgebracht.

Bei dem im allgemeinen verwendeten Siebdruckverfahren muß zunächst eine Siebdruckschablone hergestellt werden. Dazu wird das Sieb aus feinmaschigem Textil- oder Drahtgewebe, das über einen Druckrahmen gespannt wird, an den bildfreien Stellen mit einer aus Papier geschnittenen, mit Fettusche gezeichneten oder fotografisch hergestellten Schablone abgedeckt. Mittels dieser Siebdruckschablone werden dann die keramischen Farben auf ein Transfermittel, wie z.B. ein mit Gummi-Arabikum beschichtetes Papier, aufgebracht. Dieses derart vorbereitete Transfermittel wird daraufhin auf das Keramik- oder Glaserzeugnis an gewünschter Position aufgelegt und angefeuchtet, wodurch sich das Papier unter Belassung der Farben auf dem Erzeugnis entfernen läßt. Schließlich wird dann das Erzeugnis in an sich bekannter Weise gebrannt, was zu einer Verschmelzung der keramischen Farben mit dem Erzeugnis führt. Es wird somit ein dauerhafter Druck auf dem Keramik- bzw. Glaserzeugnis erzielt.

Die Herstellung der Siebdruckschablone bei dem bekannten Verfahren ist sehr aufwendig und für Einzelanfertigungen unrentabel. Zudem muß mit Hilfe einer Rakel die Druckfarbe durch die offenen Stellen der Siebdruckschablone manuell oder in Siebdruckmaschinen auf den Bedruckstoff, d.h. das Transfermittel, aufgebracht werden. Das Siebdruckverfahren ist weiterhin ein Naßverfahren, bei dem mit Drucköl angepastete, keramische Farbpigmente als Druckfarbe eingesetzt werden, so daß relativ große und teure Maschinen mit Trocknern in klimatisierten Räumen notwendig sind, und weiterhin, insbesondere im Hinblick auf die beim Herstellungsprozeß benötigten Lösungsmittel, große Arbeitsschutz- und Umweltprobleme bestehen. Die in dem Drucköl vorhandenen Lösungsmittel verdampfen relativ leicht, so daß aufwendige und teure Arbeitsschutzmaßnahmen getroffen werden müssen, und zum anderen separate Filterungsanlagen erforderlich sind. Überdies sind beim Siebdruckverfahren, wie auch beim Offsetdruckverfahren, mehrere hintereinander geschaltete Druckvorgänge für die verschiedenen Farben (z.B. Cyan, Magenta, Gelb und Schwarz) erforderlich, was weiterhin zu sehr groß ausgestalteten Anlagen führt.

Desweiteren besteht bei den bekannten Druckverfahren das Problem, daß die Reproduzierbarkeit der Farben bei einer größeren Stückzahl nicht mehr gewährleistet werden kann, und zudem bereits nach einer geringen Stückzahl, d.h. in etwa nach 100 Druckvorgängen, die Siebdruckschablone gereinigt werden muß.

Zum anderen ist bei dem Siebdruckverfahren das Auflösungsvermögen des aufgebrachten Buntdrucks durch das Raster der Siebdruckschablone begrenzt. Dies führt dazu, daß die bedruckten Keramik- oder Glaserzeugnisse häufig bezüglich der Glätte, der Homogenität und der Auflösung des Farbdrucks nicht zufriedenstellend sind. Weiterhin müssen häufig, um eine gewünschte Glätte erzeugen zu können, mehrere Sonderfarben verwendet werden.

DE-A-40 41 358 betrifft ein Verfahren zur Herstellung einer Fotokeramik über elektrofotografische Kopien unter Anwendung färbender Substanzen, wobei man die auf einen Zwischenträger (Meta-Papier oder gummiertes Papier) kopierten, färbenden Substanzen in die glasige oder keramische Oberfläche einbrennt. Als färbende Substanzen werden reine Metallpulver, Legierungspulver und/oder Metalloxidpulver eingesetzt. Die färbenden Substanzen können hierbei auch Bestandteil von Einkomponententonern oder von Entwicklern (Zweikomponententonern) elektrofotografischer Kopierverfahren sein.

JP-A-49 035 407 betrifft ein Druckverfahren für keramische Oberflächen und Glasoberflächen unter Verwendung eines Transferblattes. Hierbei handelt es sich um ein wasserabsorbierendes, dichtes Papier, das mit einer auf Dextrin oder Gummiarabikum basierenden Paste beschichtet wird. Das gewünschte Muster wird anschließend auf die pasteuse Schicht mittels eines Siebdruckverfahrens aufgebracht und anschließend mit einem Lack überzogen. Das Transferapier wird anschließend in Wasser eingetaucht, um die pasteuse Schicht zu lösen, und das Druckmuster wird mit der Schutzschicht von dem Trägerpapier abgezogen und auf die Oberfläche des keramischen Körpers plaziert. Nach Abziehen des Schutzfilms wird das Druckmuster mit einer Temperatur von 830°C gebrannt.

Die DE-C-71497 betrifft ein Verfahren zur Herstellung von Farbendruck auf Glasflächen, wobei die zu übertragenden Farben auf ein spezielles Papier aufgebracht und anschließend auf die Glasoberfläche übertragen werden, wobei jedoch kein elektrofotografisches Reproduktionsverfahren (Elektrokopierverfahren) eingesetzt wird.

Die der Erfindung zugrundeliegende Aufgabe besteht darin, ein Verfahren zur Herstellung von dekorierten Keramik- und Glaserzeugnissen zu schaffen, das die oben genannten Probleme der im Stand der Technik bekannten Druckverfahren überwindet. Weiterhin soll ein dekoriertes Keramik- und Glaserzeugnis bereitgestellt werden, das hinsichtlich der Glätte, der Feinheit und der Auflösung des Dekors (des Drucks) den bekannten Erzeugnissen überlegen ist. Schließlich soll eine keramische Farbzusammensetzung geschaffen werden, die für die Durchführung des obigen Verfahrens und zur Herstellung der gewünschten, dekorierten Keramik- und Glaserzeugnisse geeignet ist.

Die Lösung der obigen Aufgabe(n) besteht in einem Verfahren zur Herstellung von dekorierten Keramik- und Glaserzeugnissen, gemäß dem keramische Farbzusammensetzungen auf ein Transfermittel aufgetragen werden, das mit den keramischen Farbzusammensetzungen beschichtete Transfermittel auf das Keramik- bzw. Glaserzeugnis aufgebracht wird, und, nach Entfernen des Transfermittels, die keramischen Farbzusammensetzungen durch Brennen mit dem Erzeugnis verbunden werden, das dadurch gekennzeichnet ist, daß die keramischen Farbzusammensetzungen feine Teilchen beinhalten, die jeweils keramische Pigmente und Bindemittelharz(e) umfassen, daß der Anteil der keramischen Pigmente in den keramischen Farbzusammensetzungen 10 bis 70 Gew.% beträgt, daß die keramischen Pigmente Teilchenkerne bilden, die von Bindemittelharz(en) umhüllt sind, und daß die keramischen Farbzusammensetzungen mittels eines elektrofotografischen Reproduktionsverfahrens (Elektrokopierverfahrens) auf das Transfermittel aufgetragen werden.

Die mit dem erfindungsgemäßen Verfahren dekorierten Keramikerzeugnisse betreffen insbesondere die aus Ton oder tonmineralhaltigen Mischungen geformten und gebrannten Erzeugnisse. Weitere bevorzugte Keramikerzeugnisse beinhalten auch Produkte aus sonderkeramischen Werkstoffen, wie z.B. verschiedenste pulverförmige Materialien (z.B. Metalloxide), die nicht silikatischer Natur sind. Beispielhaft können die Keramikerzeugnisse Waren aus Porzellan, Steingut, aber auch aus sonderkeramischen Stoffen, wie Steatit, Rutil, Cordierit und Cermets, darstellen. Das Keramikerzeugnis kann weiterhin vor dem Dekorieren mit einer Glasur versehen werden, oder die Glasur kann nach dem Dekorieren aufgebracht werden. Glaserzeugnisse umfassen im Rahmen der Erfindung alle aus einer Glasmasse hergestellten Erzeugnisse oder Erzeugnisse mit einer Glasoberfläche. Insbesondere sollen hierbei Glaserzeugnisse erwähnt werden, die aus einfachen und zusammengesetzten Silikaten von Natrium, Kalium, Calcium, Magnesium, Aluminium, Barium, Zink und Blei bestehen. Diese Gläser sind auf feurig-flammendem Wege entstanden, und die abgekühlten Schmelzen bestehen im wesentlichen aus Siliciumdioxid, Calciumoxid und Natriumoxid, wobei Spezialgläser daneben auch größere Mengen von Bortrioxid, Phosphorpentoxid, Bariumoxid, Kaliumoxid, Lithiumoxid, Zirconoxid oder Bleioxid enthalten können. Siliciumdioxid, Boroxid und Phosphorpentoxid sind die eigentlichen Glasbildner, die auch die Grundlage des Emailles bilden. Dementsprechend sollen unter dem Begriff "Glaserzeugnisse" auch Emailleerzeugnisse verstanden werden.

Die gemäß der Erfindung zu verwendenden keramischen Pigmente sind allgemein temperaturbeständige Materialien, die zur Herstellung von farbigen Überzügen und zur feuerbeständigen Einfärbung von Keramik- oder Glaserzeugnissen verwendet werden können. Die keramischen Pigmente im Sinne der Erfindung sind im allgemeinen keramische Farbkörper anorganischer Natur mit ausgezeichneter Feuerfestigkeit.

Beispielhaft können als keramische Farbkörper Verbindungen von Oxiden der Übergangselemente miteinander oder mit Metalloxiden von Elementen der Hauptgruppen des Periodensystems genannt werden. Diese Verbindungen sind im allgemeinen nach dem Spinell-Typ aufgebaut. Die oben erwähnten keramischen Farbkörper vom Spinell-Typ werden z.B. durch Mischen von zweiwertigen Metalloxiden (z.B. MgO, ZnO, CoO, FeO) in stöchiometrischem Verhältnis mit einem dreiwertigen Metalloxid (z.B. Al₂O₃, Cr₂O₃, Fe₂O₃) und anschließendem Glühen dieser Mischungen erhalten.

Weiterhin können beispielhaft farblose Verbindungen, wie Zirconsilikat, Zirconoxid oder Zinnoxid genannt werden, in deren Kristallgitter färbende Ionen der Übergangsmetalle eingebaut sind, wie es z.B. in Zirconvanadinblau, in Zirconpraesodymgelb, in Zinnvanadingelb und in Zirconeisenrosa der Fall ist. Weiterhin sollen Einschlußfarbkörper genannt werden, bei denen intensive Pigmente, z.B. Cadmiumsulphoselenid, umhüllt werden von einer farblosen, aber sehr brennstabilen Verbindung, wie Zirconsilikat oder Zinnoxid. Die obigen keramischen Farbkörper werden allgemein als Verbindungen des Zirkonsilikat-Typs bezeichnet.

Gemäß dem erfindungsgemäßen Verfahren werden die keramischen Pigmente zu einer keramischen Farbzusammensetzung (Toner) verarbeitet, die die genannten keramischen Pigmente und ein geeignetes Bindemittelharz umfaßt. Dieser Toner beinhaltet feine Teilchen, die im allgemeinen jeweils ein Bindemittelharz und ein keramisches Pigment, das in dem Harz dispergiert ist, umfassen. Die Teilchen weisen hierbei vorzugsweise eine Größe (einen Durchmesser) von 1 bis 50 µm auf, wobei eine durchschnittliche Teilchengröße von 5 µm besonders bevorzugt ist. Der Anteil des keramischen Pigments in dem Toner beträgt weiterhin 10 bis 70 Gew.%. Die Teilchen sind weiterhin jeweils so aufgebaut, daß ein Kern aus keramischen Pigmenten gebildet ist, der von Bindemittelharz(en) umhüllt ist.

Der obige Toner wird z.B. hergestellt, indem man das keramische Pigment und das Bindemittelharz innig vermischt, die erhaltene Mischung in der Schmelze knetet, abkühlt, pulverisiert und zu der gewünschten Teilchengröße klassiert.

Die erfindungsgemäß zu verwendenden Bindemittelharze müssen beim späteren Brennvorgang rückstandslos verbrennen, müssen weiterhin in ihrer Elastizität so eingestellt werden, daß sie die gewünschte Menge an keramischen Farbpigmenten aufnehmen können und beim Mahlen (Pulverisieren) der Mischung nicht brechen, und besitzen vorzugsweise eine Schmelztemperatur von ungefähr 140°C. Die Sprödigkeit des Harzes und seine Schmelztemperatur können insbesondere durch eine geeignete Gestaltung des Molekulargewichts, der Zusammensetzung und des Vernetzungsgrades eingestellt werden.

Das erfindungsgemäß zu verwendende Bindemittelharz ist hierbei vorzugsweise aus Vinylmonomeren aufgebaut. Spezielle Beispiele für Vinylmonomere beinhalten: Styrol und dessen Derivate, wie z.B. Styrol, ortho-Methylstyrol, metha-Methylstyrol, para-Methylstyrol, para-Methoxystyrol und para-Ethylstyrol; Methacrylsäureester, wie Methylmethacrylat, Ethylmethacrylat, Propylmethacrylat, n-Butylmethacrylat, Isobutylmethacrylat, n-Octylmethacrylat, Dodecylmethacrylat, 2-Ethylhexylmethacrylat, Stearylmethacrylat, Phenylmethacrylat, Dimethylaminoethylmethacrylat und Diethylaminoethylmethacrylat; Acrylsäureester, wie z.B. Methylacrylat, Ethylacrylat, n-Butylacrylat, Isobutylacrylat, Propylacrylat, n-Octylacrylat, Dodecylacrylat, 2-Ethylhexylacrylat, Stearylacrylat, 2-Chloroethylacrylat und Phenylacrylat; Derivate von Acrylsäure und Methacrylsäure, wie Acrylnitril, Methacrylnitril und Acrylamid. Weitere Beispiele sind durch Dicarbonsäuren mit einer Doppelbindung und deren Derivate, wie z.B. Maleinsäure, Monobutylmaleat, Dibutylmaleat, Monomethylmaleat und Dimethylmaleat; Vinylester, wie z.B. Vinylchlorid, Vinylacetat und Vinylbenzoat; Vinylketone, wie z.B. Vinylmethylketon oder Vinylethylketon; und Vinylether, wie z.B. Vinylmethylether, Vinylethylether und Vinylisobutylether, gegeben. Diese Monomere können entweder einzeln oder in einer Mischung von zwei oder mehreren (co)polymerisiert werden. Hierbei ist es besonders bevorzugt, Styrol oder seine Derivate alleine oder in Kombination mit anderen der obigen Monomere oder Esterderivate zu verwenden. Weiterhin können auch Polyurethane, Polyamide, Epoxyharze, Terpenharze, phenolische Harze, aliphatische oder alizyklische Kohlenwasserstoffharze, aromatische Petroleumharze, chlorierte Paraffine und Paraffinwachse geeignet sein. Auch können mehrere der obigen Bindemittelharze in Kombination eingesetzt werden.

Gemäß der vorliegenden Erfindung kann die keramische Farbzusammensetzung (Toner) weiterhin Ladungssteuerungsmittel und/oder ein Mittel zur Verbesserung der Fließfähigkeit enthalten. Beispiele für Ladungssteuerungsmittel sind durch Ruß, Eisenschwarz, Graphit, Nikrosin, Metallkomplexe von Monoazofarbstoffen, Hansagelb, Benzidingelb und verschiedene Lackpigmente gegeben. Die Fließfähigkeit kann z.B. durch hydrophobes, kolloidales Siliciumdioxid verbessert werden. Die obigen Mittel werden vorzugsweise in einer Menge von 0,05 bis 5 Gew.%, und insbesondere bevorzugt von 0,1 bis 2 Gew.%, dem Toner zugegeben.

Weiterhin ist es auch möglich, daß der Toner magnetische Teilchen, wie z.B. Eisen, Mangan, Nickel, Kobalt und Chrom, Magnetit, Hematit, verschiedene Ferrite, Manganlegierungen und andere ferromagnetische Legierungen, enthält.

Schließlich ist es auch möglich, einen sogenannten Zweikomponententoner zu verwenden, der neben dem keramischen Farbpigment, dem Bindemittelharz und gegebenenfalls den oben genannten Additiven Trägerteilchen enthält, die z.B. durch Eisenpulver oder Glasperlen dargestellt werden können.

Als Transfermittel wird bei dem erfindungsgemäßen Verfahren vorzugsweise ein Papierträger verwendet, der mit Gummi-Arabikum, Polyvinylacetat oder Wachs beschichtet ist. Insbesondere bevorzugt ist ein mit Gummi-Arabikum beschichteter Papierträger, da sich in diesem Fall das Transfermittel auf sehr einfache Weise durch Anfeuchten mit Wasser, wobei sich das Gummi-Arabikum von dem Trägerpapier löst, und anschließendem Wegziehen des Trägerpapiers entfernen läßt, wobei eine kopierte, keramische Farbzusammensetzung auf dem zu bedruckenden Keramik- oder Glaserzeugnis zurückbleibt.

Gemäß dem beanspruchten Verfahren wird die keramische Farbzusammensetzung auf das Transfermittel über ein elektrofotografisches Reproduktionsverfahren aufgebracht. Dieses Verfahren beruht auf fotoelektrischen und elektrostatischen Effekten und wird daher auch elektrostatisches Kopierverfahren genannt.

Das obige Verfahren umfaßt im allgemeinen die Schritte der Erzeugung eines elektrischen latenten Bildes bzw. Ladungsbildes auf einem lichtempfindlichen Aufzeichnungsmaterial, das im allgemeinen ein fotoleitfähiges Material enthält; der darauffolgenden Entwicklung des latenten Bildes bzw. des Ladungsbildes mit der erfindungsgemäß eingesetzten keramischen Farbzusammensetzung, die als Toner fungiert; der Übertragung des erhaltenen Tonerbildes auf ein Bildempfangsmaterial (späteres Transfermittel), wie z.B. Papier; und des Fixierens des Tonerbildes z.B. unter Anwendung von Wärme, Druck oder Lösungsmitteldampf, wodurch eine Kopie erhalten wird. Zum Sichtbarmachen von elektrischen latenten Bildern bzw. Ladungsbildern sind verschiedene Entwicklungsverfahren bekannt, beispielsweise das Magnetbürstenverfahren, das Kaskadenentwicklungsverfahren, das Pelzbürstenverfahren, das Pulverwolkenverfahren, das Kontaktentwicklungsverfahren, das Übersprungentwicklungsverfahren und das Magnet-Dry-Verfahren. Farbige Kopien werden durch mehrmalige, hintereinander durchgeführte Reproduktionsvorgänge erreicht, wobei mehrere keramische Farbzusammensetzungen der entsprechenden Farbe (z.B. Cyan, Magenta, Gelb und Schwarz) verwendet werden.

Für die Durchführung des oben dargestellten elektrofotografischen Reproduktionsverfahrens erweist sich ein Laserdrucker, wie z.B. Canon CLC 350, als sehr vorteilhaft. Hierbei ist es günstig, die Temperatur an der Walze auf etwa 145 bis 150°C einzustellen, und die Laserleistung, die Entladungskorona, das Kontrastpotential und den Tonerauftrag möglichst hoch einzustellen. Die optimalen Verfahrensbedingungen können, in Abhängigkeit von der eingesetzten Kopiervorrichtung, durch einfache Versuche optimiert werden.

Da die für die Durchführung des erfindungsgemäßen Verfahrens verwendeten keramischen Farbzusammensetzungen im allgemeinen eine geringe Farbintensität aufweisen, ist es vorteilhaft, diese als Toner fungierenden Farbzusammensetzungen mit einer hohen Dicke auf das Transfermittel (Bildempfangsmaterial) aufzutragen. Üblicherweise liegt die Schichtdicke des Tonerauftrags von vier übereinander liegenden Farben bei elektrofotografischen Reproduktionsverfahren, wie z.B. dem Laserdrucken, im Bereich von einigen 1/100 mm. Im Zusammenhang mit dem erfindungsgemäßen Verfahren hat es sich jedoch aufgrund der Farbintensität der keramischen Farbzusammensetzungen als vorteilhaft erwiesen, die Schichtdicke des Tonerauftrags auf einen Bereich von 0,1 mm - 3 mm, vorzugsweise 0,3 mm - 0,6 mm, zu erhöhen, wenn vier keramische Farbzusammensetzungen der entsprechenden Farbe (z.B. Cyan, Magenta, Gelb und Schwarz) übereinander gelegt werden.

Bei einer solch hohen Schichtdicke des Tonerauftrags ist es dann besonders vorteilhaft, den Fixiervorgang üblicher, elektrofotografischer Reproduktionsverfahren zu modifizieren. Beim üblichen Kopiervorgang wird zum Fixieren des Toners das mit dem Toner beschichtete Bildempfangsmaterial (z.B. Papier) durch heiße Fixierwalzen gepreßt, um so Toner und Bildempfangsmaterial (Papier) zu verbinden und um den benötigten Glanz zu erreichen. Bei extrem dicken Tonerlagen können jedoch die Farbschichten beim Pressen durch die Walzen plattgedrückt werden, und das Bild wird beschädigt. Weiterhin ist es auch möglich, daß die Wärme beim Fixieren nicht mehr ausreichend durch die dicke Tonerschicht dringt, so daß sich der Toner nicht mehr vollständig mit dem Bildempfangsmaterial (späteres Transfermittel) verbindet, und somit Hohlräume zwischen Toner und Bildempfangsmaterial, z.B. Papier, entstehen. Beim keramischen Brennen bilden sich dann unter diesen Hohlräumen Gase, so daß Blasen entstehen und das gebrannte Keramik- oder Glaserzeugnis fehlerhaft wird. Weiterhin wird häufig beim Fixiervorgang ein Fixierölfilm auf den Heizwalzen verwendet, um das fixierte Material sauber von den Walzen lösen zu können. Dieser Fixierfilm kann jedoch einen späteren Auftrag von Klarlack zum zusätzlichen Fixieren der Farbzusammensetzungen auf dem Transfermittel behindern, wenn er den Lack abstößt.

Die oben beschriebenen, nachteiligen Eigenschaften lassen sich jedoch verhindern, wenn man bei dem elektrofotografischen Reproduktionsvorgang keine heißen Fixierwalzen einsetzt, sondern das mittels der keramischen Farbzusammensetzungen erzeugte Tonerbild nach der Übertragung auf das Transfermittel drucklos unter Anwendung von Wärme fixiert. Hierbei kann man das mit den keramischen Farbzusammensetzungen beschichtete Transfermittel über ein Transportband unter Heizstrahlern oder durch einen Ofen laufen lassen. Als Fixiertemperatur hat sich hierbei ein Wert von 200°C als günstig erwiesen.

Das Mischungsverhältnis zwischen Toner und Entwickler liegt bei den elektrofotografischen Reproduktionsverfahren üblicherweise bei 20 Gew.% Toner. Werden die keramischen Farbzusammensetzungen jedoch in einer Schichtdicke von 0,1 mm oder mehr auf das Transfermittel aufgetragen, so hat es sich als vorteilhaft erwiesen, das Mischungsverhältnis auf einen Bereich zwischen 30 Gew.% und 80 Gew.% Toner einzustellen.

Durch Einlesen der Daten des gewünschten, auf dem Keramik- oder Glaserzeugnis aufzubringenden Bildes mittels eines digitalen Farbscanners und Übertragung dieser Daten mittels eines Personal Computers in den Bildspeicher der elektrofotografischen Reproduktionseinrichtung wird vorteilhafterweise dem Benutzer erstmals die Möglichkeit gegeben, auch bei nur sehr geringen herzustellenden Stückzahlen Änderungen, wie z.B. in der Farbabstufung, der Rasterung, vorzunehmen. Auch können alle mittels der heutigen Computertechnologie möglichen Grafiken und/oder Abänderungen direkt auf das Transfermittel übertragen werden.

In einer weiteren vorteilhaften Ausgestaltung des erfindungsgemäßen Verfahrens kann die keramische Farbzusammensetzung nach dem Aufbringen auf dem Transfermittel durch einen Klarlack, der beim Brennen rückstandslos verbrennt, zusätzlich fixiert werden. Dadurch wird verhindert, daß sich die keramische Farbzusammensetzung beim Auflegen des Transfermittels auf das Keramik- oder Glaserzeugnis verwischt oder anderweitig beschädigt wird.

Der nach dem Entfernen des Transfermittels stattfindende, abschließende Brennschritt erfolgt in Abhängigkeit von dem Material des Keramik- bzw. Glaserzeugnisses im allgemeinen bei einer Temperatur im Bereich von 800 bis 1500°C.

Mit dem oben dargestellten, erfindungsgemäßen Verfahren ist es möglich, die im Stand der Technik bestehenden Nachteile des Siebdruckverfahrens zu überwinden. Es entfällt die bisher notwendige Reinigung von Siebdruckschablonen und die Verwendung von Lösungsmitteln mit den bekannten Nachteilen. Es sind keine großen Klimatisierungsanlagen und Schutzvorrichtungen für das Arbeitspersonal zwingend notwendig, und es besteht somit auch erstmals die Möglichkeit, zum Beispiel in einem Einzelhandelsgeschäft, auf einem mit der erfindungsgemäßen keramischen Zusammensetzung (Toner) arbeitenden Farbkopierer Teller, Porzellanerzeugnisse oder andere Produkte nach den Wünschen des Kunden zu verzieren.

Weiterhin kann bei dem erfindungsgemäßen Verfahren unabhängig von der Stückzahl sehr kostengünstig das gewünschte, aufzubringende Bild erstellt werden. Die Kosten für die Erstellung von Großserien, wie z.B. bei der Fliesenherstellung, werden stark verringert. Auch bei sehr geringen Stückzahlen ist es nunmehr möglich, verschiedene Änderungen, wie z.B. Farbwahl oder Rasterung, vorzunehmen, da die Abbildung im Computer verarbeitbar ist und keine extra neuen Schablonen hergestellt werden müssen. Dadurch ist das erfindungsgemäße Verfahren um vieles einfacher und billiger als die bekannten Verfahren.

Die Erfindung beinhaltet weiterhin nach dem obigen Verfahren erhältliche, dekorierte Keramik- und Glaserzeugnisse. Diese zeichnen sich gegenüber den durch das bekannte Siebdruckverfahren (oder Offsetdruckverfahren) erhaltenen Produkten durch die folgenden Eigenschaften aus: Die Bildflächen wirken sehr glatt, homogen und ungerastert. Gegenüber den bekannten bedruckten Erzeugnissen wird eine höhere Feinheit, Glätte und Auflösung erzielt.

Schließlich betrifft die Erfindung eine keramische Farbzusammensetzung, die feine Teilchen beinhaltet, die jeweils keramische Pigmente, Bindemittelharz(e) und gegebenenfalls weitere Additive, wie Mittel zur Ladungssteuerung und Verbesserung der Fließfähigkeit, Trägermaterialien und/oder magnetische Teilchen, umfassen. Die Gewichtsmenge des keramischen Pigments in der keramischen Farbzusammensetzung beträgt 10 bis 70%. Die Teilchen weisen weiterhin einen Kern aus keramischen Pigmenten auf, der von Bindemittelharz(en) umhüllt ist.

Bei den keramischen Pigmenten handelt es sich vorzugsweise um Verbindungen des Spinell-Typs oder des Zirconsilikat-Typs.

Das Bindemittelharz weist die Eigenschaften auf, daß es rückstandslos verbrennt, eine ausreichende Elastizität aufweist, um die entsprechende Pigmentmenge zu binden und beim Mahlen (Pulverisieren) der Mischung aus Pigment und Harz nicht zu brechen, und vorzugsweise einen Schmelzpunkt von etwa 140°C besitzt. Die beiden zuletzt genannten Eigenschaften lassen sich insbesondere über das Molekulargewicht, die Zusammensetzung und den Vernetzungsgrad einstellen.

Das Bindemittelharz ist vorzugsweise aus einem oder mehreren Vinylmonomeren aufgebaut, und umfaßt insbesondere Polymere oder Copolymere von Styrol oder Derivaten hiervon oder auch Esterderivate.

Die Teilchengröße der keramischen Farbzusammensetzung liegt vorteilhafterweise zwischen 1 und 50 µm und besonders bevorzugt bei etwa 5 µm.

Im folgenden wird zur weiteren Erläuterung und zum besseren Verständnis der Erfindung ein Ausführungsbeispiel unter Bezugnahme auf die beigefügten Figuren näher dargestellt.
- Fig. 1:: Ablaufplan des erfindungsgemäßen Verfahrens;
- Fig. 2:: Aufbau eines Teilchens der erfindungsgemäßen, keramischen Farbzusammensetzung.

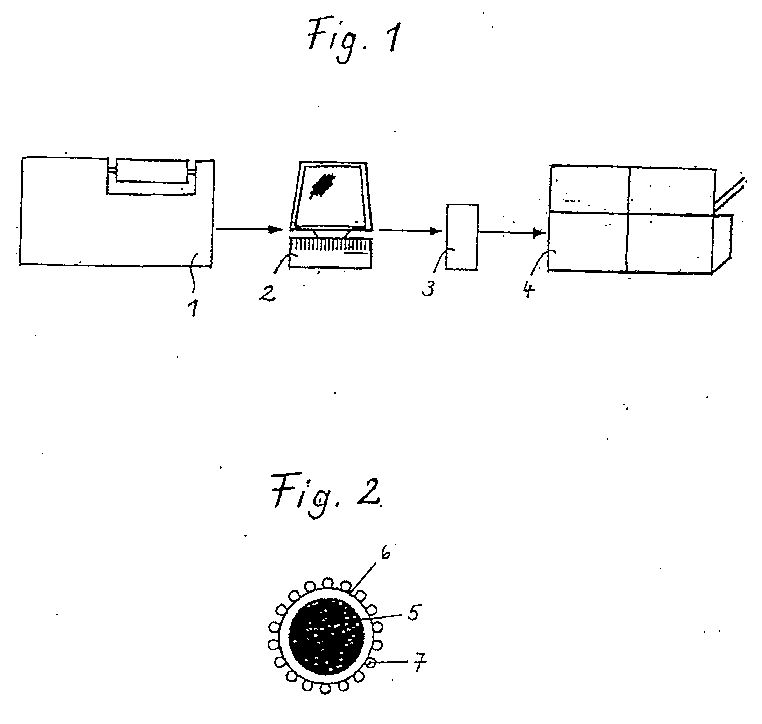

In der Figur 1 ist eine schematische Darstellung eines Ablaufplans des erfindungsgemäßen Verfahrens gezeigt. Ein Scanner (1), wie z.B. ein DC 3000 hell, ist mittels einer Datenleitung mit einem Personal Computer (2), z.B. einem Apple Quadra 950, verbunden. Dieser Personal Computer (2) wiederum ist mittels einer weiteren Datenleitung mit einem Farblaserdrucker (4) verknüpft, der eine Bildspeichereinrichtung (3), IPU, umfaßt. Als Farblaserdrucker (4) wird beispielhaft ein Canon CLC 350 genannt.

Die auf einem Keramik- oder Glaserzeugnis, z.B. einem Teller, aufzubringende bildliche Darstellung, die z.B. bereits als Fotografie vorliegt, wird über den Scanner (1) aufgenommen. Die entsprechenden Daten werden vom Scanner (1) an den Personal Computer (2) weitergegeben und können dort gegebenenfalls entsprechend den Wünschen des Benutzers geändert werden. Diese Änderungen können die Farbe, die Farbabstufung, Bildausschnittsänderungen und vieles mehr umfassen. Ist ein entsprechendes Bild entworfen, werden diese Daten mittels der Datenleitung an den Farblaserdrucker (4) weitergegeben. Der Farblaserdrucker (4)enthält eine oder mehrere keramische Farbzusammensetzungen der erfindungsgemäßen Art. Entsprechend der im Personal Computer (2) erstellten Vorlage wird ein mit Gummi-Arabikum beschichtetes Papier nacheinander mit den verschiedenen keramischen Farbzusammensetzungen mittels elektrofotografischer Reproduktion beschichtet. Gemäß der Fig. 2 bestehen die Teilchen der keramischen Farbzusammensetzungen aus einem Pigmentkern (5), einer Bindemittelharzhülle (6) und Ladungssteuerungsmitteln (7). Danach wird ein Klarlack auf die auf der Gummi-Arabikum-Beschichtung aufgetragenen keramischen Farbzusammensetzungen aufgebracht, damit diese gegen Verwischen oder Beschädigung geschützt sind. Das mit den keramischen Farbzusammensetzungen versehene, mit Gummi-Arabikum beschichtete Papier wird auf das entsprechende Keramik- oder Glaserzeugnis, z.B. einem Teller, in gewünschter Weise aufgelegt bzw. angebracht. Durch Anfeuchten des Papiers löst sich dieses von der Schicht aus Gummi-Arabikum und läßt sich von dem Keramik- oder Glaserzeugnis leicht wegziehen, so daß nur noch die keramischen Farbzusammensetzungen auf dem Erzeugnis verbleiben. Anschließend wird das Erzeugnis mit den in gewünschter Weise aufgebrachten keramischen Farbzusammensetzungen in einem Ofen in bekannter Weise gebrannt, wodurch die Farben mit der Oberfläche des Erzeugnisses verschmelzen. Der über dieses Verfahren erhältliche bedruckte Teller weist ein Dekor auf, das bezüglich seiner Homogenität, Glätte und Auflösung ausgezeichnet ist.

## Patentansprüche

1. Verfahren zur Herstellung von dekorierten Keramik- und Glaserzeugnissen, gemäß dem keramische Farbzusammensetzungen auf ein Transfermittel aufgetragen werden, das mit den keramischen Farbzusammensetzungen beschichtete Transfermittel auf das Keramik- bzw. Glaserzeugnis aufgebracht wird, und, nach Entfernen des Transfermittels, die keramischen Farbzusammensetzungen durch Brennen mit dem Erzeugnis verbunden werden, dadurch **gekennzeichnet**, daß die keramischen Farbzusammensetzungen feine Teilchen beinhalten, die jeweils keramische Pigmente und Bindemittelharz(e) umfassen, daß der Anteil der keramischen Pigmente in den keramischen Farbzusammensetzungen 10 bis 70 Gew.% beträgt, daß die keramischen Pigmente Teilchenkerne bilden, die von Bindemittelharz(en) umhüllt sind, und daß die keramischen Farbzusammensetzungen mittels eines elektrofotografischen Reproduktionsverfahrens (Elektrokopierverfahren) auf das Transfermittel aufgetragen werden.

2. Verfahren nach Anspruch 1, dadurch **gekennzeichnet**, daß die keramischen Pigmente Farbkörper des Spinell-Typs oder Zirconsilikat-Typs darstellen.

3. Verfahren nach Anspruch 1 oder 2, dadurch **gekennzeichnet**, daß das Bindemittelharz aus einem oder mehreren Vinylmonomeren aufgebaut ist.

4. Verfahren nach Anspruch 3, dadurch **gekennzeichnet**, daß das Bindemittelharz aus Styrol oder Derivaten hiervon alleine oder in Kombination mit anderen Vinylmonomeren oder aus Esterderivaten aufgebaut ist.

5. Verfahren nach einem oder mehreren der vorhergehenden Ansprüche, dadurch **gekennzeichnet**, daß die feinen Teilchen eine Größe von 1 bis 50 /um aufweisen.

6. Verfahren nach einem oder mehreren der vorhergehenden Ansprüche, dadurch **gekennzeichnet,** daß die keramischen Farbzusammensetzungen weiterhin ein oder mehrere Additive aus der Reihe Ladungssteuerungsmittel, Mittel zur Verbesserung der Fließfähigkeit, magnetische Teilchen und Trägerteilchen umfassen.

7. Verfahren nach einem oder mehreren der vorhergehenden Ansprüche, dadurch **gekennzeichnet**, daß das Transfermittel ein Papierträger ist, der mit Gummi-Arabikum, Polyvinylacetat oder Wachs beschichtet ist.

8. Verfahren nach einem oder mehreren der vorhergehenden Ansprüche, dadurch **gekennzeichnet**, daß die keramischen Farbzusammensetzungen mittels eines Laserdruckers auf das Transfermittel aufgetragen werden.

9. Verfahren nach einem oder mehreren der vorhergehenden Ansprüche, dadurch **gekennzeichnet,** daß die keramischen Farbzusammensetzungen in einer Schichtdicke von 0,1 mm - 3 mm, vorzugsweise 0,3 mm - 0,6 mm, auf das Transfermittel aufgetragen werden.

10. Verfahren nach einem oder mehreren der vorhergehenden Ansprüche, dadurch **gekennzeichnet**, daß die keramischen Farbzusammensetzungen nach der Übertragung auf das Transfermittel drucklos unter Anwendung von Wärme fixiert werden.

11. Verfahren nach einem oder mehreren der vorhergehenden Ansprüche, dadurch **gekennzeichnet,** daß man beim elektrofotografischen Reproduktionsverfahren das Mischungsverhältnis zwischen den keramischen Farbzusammensetzungen und dem Entwickler auf einen Bereich zwischen 30 Gew.% und 80 Gew.% Toner einstellt.

12. Verfahren nach einem oder mehreren der vorhergehenden Ansprüche, dadurch **gekennzeichnet**, daß die keramischen Farbzusammensetzungen nach dem Aufbringen auf dem Transfermittel zusätzlich durch einen Klarlack fixiert werden.

13. Verfahren nach einem oder mehreren der vorhergehenden Ansprüche, dadurch **gekennzeichnet**, daß die keramischen Farbzusammensetzungen bei einer Temperatur im Bereich von 800 bis 1500°C gebrannt werden.

14. Dekorierte Keramik- oder Glaserzeugnisse, erhältlich nach einem Verfahren gemäß einem der obigen Ansprüche 1 bis 13.

15. Keramische Farbzusammensetzung, dadurch **gekennzeichnet**, daß sie feine Teilchen beinhaltet, die jeweils keramische Pigmente, Bindemittelharz(e) und gegebenenfalls ein oder mehrere Additive aus der Reihe Ladungssteuerungsmittel, Mittel zur Verbesserung der Fließfähigkeit, Trägerteilchen und magnetische Teilchen umfassen, daß die Gewichtsmenge der keramischen Pigmente 10 bis 70% in der keramischen Farbzusammensetzung beträgt, und daß die keramischen Pigmente Teilchenkerne bilden, die von Bindemittelharz(en) umhüllt sind.

16. Keramische Farbzusammensetzung nach Anspruch 15, dadurch **gekennzeichnet,** daß die keramischen Pigmente Verbindungen des Spinell-Typs oder des Zirconsilikat-Typs darstellen.

17. Keramische Farbzusammensetzung nach Anspruch 15 oder 16, dadurch **gekennzeichnet,** daß das Bindemittelharz aus einem oder mehreren Vinylmonomeren aufgebaut ist.

18. Keramische Farbzusammensetzung nach Anspruch 17, dadurch **gekennzeichnet,** daß das Bindemittelharz aus Styrol oder Derivaten hiervon alleine oder in Kombination mit anderen Vinylmonomeren oder aus Esterderivaten aufgebaut ist.

19. Keramische Farbzusammensetzung nach einem oder mehreren der vorhergehenden Ansprüche 15 bis 18, dadurch **gekennzeichnet**, daß die Teilchengröße der keramischen Farbzusammensetzung 1 bis 50 µm beträgt.

## Claims

1. Process for preparing decorated ceramic and glass products, according to which ceramic colour compositions are applied to a transferring agent, the transferring agent coated with the ceramic colour compositions is applied to the ceramic or glass product, and, after removing the transferring agent, the ceramic colour compositions are joined to the product by firing, characterised in that the ceramic colour compositions contain fine particles including in each case ceramic pigments and binder resin(s), in that the proportion of ceramic pigments in the ceramic colour compositions is 10 to 70 wt.%, in that the ceramic pigments form particle cores which are surrounded by binder resin(s), and in that the ceramic colour compositions are applied to the transferring agent by means of an electrophotographic reproduction process (electrocopying process).

2. Process according to claim 1, characterised in that the ceramic pigments are colouring substances of the spinel type or zirconium silicate type.

3. Process according to claim 1 or 2, characterised in that the binder resin is composed of one or more vinyl monomers.

4. Process according to claim 3, characterised in that the binder resin is composed of styrene or derivatives thereof alone or in combination with other vinyl monomers or of ester derivatives.

5. Process according to one or more of the preceding claims, characterised in that the fine particles have a size of 1 to 50 µm.

6. Process according to one or more of the preceding claims, characterised in that the ceramic colour compositions also include one or more additives from the series comprising charge-control agents, means for improving the flowability, magnetic particles and carrier particles.

7. Process according to one or more of the preceding claims, characterised in that the transferring agent is a paper substrate which is coated with gum arabic, polyvinyl acetate or wax.

8. Process according to one or more of the preceding claims, characterised in that the ceramic colour compositions are applied to the transferring agent by means of a laser printer.

9. Process according to one or more of the preceding claims, characterised in that the ceramic colour compositions are applied to the transferring agent at a layer thickness of 0.1 mm - 3 mm, preferably 0.3 mm - 0.6 mm.

10. Process according to one or more of the preceding claims, characterised in that the ceramic colour compositions are fixed without pressure using heat after transfer to the transferring agent.

11. Process according to one or more of the preceding claims, characterised in that during the electrophotographic reproduction process, the mixing ratio between the ceramic colour compositions and the developer is set at a range between 30 wt.% and 80 wt.% of toner.

12. Process according to one or more of the preceding claims, characterised in that the ceramic colour compositions are fixed additionally by means of a clear lacquer after application to the transferring agent.

13. Process according to one or more of the preceding claims, characterised in that the ceramic colour compositions are fired at a temperature in the range from 800 to 1,500°C.

14. Decorated ceramic or glass products which can be obtained by a process according to one of the above claims 1 to 13.

15. Ceramic colour composition, characterised in that it contains fine particles including in each case ceramic pigments, binder resin(s) and optionally one or more additives from the series comprising charge-control agents, means for improving the flowability, carrier particles and magnetic particles, in that the quantity by weight of ceramic pigments is 10 to 70 % in the ceramic colour composition, and in that the ceramic pigments form particle cores which are surrounded by binder resin(s).

16. Ceramic colour composition according to claim 15, characterised in that the ceramic pigments are compounds of the spinel type or of the zirconium silicate type.

17. Ceramic colour composition according to claim 15 or 16, characterised in that the binder resin is composed of one or more vinyl monomers.

18. Ceramic colour composition according to claim 17, characterised in that the binder resin is composed of styrene or derivatives thereof alone or in combination with other vinyl monomers or of ester derivatives.

19. Ceramic colour composition according to one or more of the preceding claims 15 to 18, characterised in that the particle size of the ceramic colour composition is 1 to 50 µm.

## Revendications

1. Procédé de fabrication d'objets céramiques et vitreux décorés, selon lequel des compositions de couleur céramiques sont appliquées sur un moyen de transfert, qui est appliqué, avec les moyens de transfert revêtus des compositions de couleur céramiques, sur l'objet céramique et/ou vitreux et, après, enlèvement des moyens de transfert, les compositions de couleur céramiques étant liées à l'objet par cuisson, caractérisé en ce que les compositions de couleur céramiques contiennent de fines particules qui comprennent chacune des pigments céramiques et une ou des résines formant liant, en ce que la proportion des pigments céramiques dans les compositions de couleur céramiques est de 10 à 70 % en poids, en ce que les pigments céramiques constituent des noyaux de particule qui sont enveloppés par une ou des résines formant liant, et en ce que les compositions de couleur céramiques sont appliquées sur les moyens de transfert au moyen d'un procédé de reproduction de nature électrophotographique (procédé d'électrocopie).

2. Procédé selon la revendication 1, caractérisé en ce que les pigments céramiques constituent des corps colorés, du type spinelle ou du type silicozirconate.

3. Procédé selon la revendication 1 ou 2, caractérisé en ce que la résine formant liant est constituée d'un ou plusieurs monomères de vinyle.

4. Procédé selon la revendication 3, caractérisé en ce que la résine formant liant est composée de styrène ou de dérivés de celui-ci, seuls ou en combinaison avec d'autres monomères vinyle ou constituées de dérivés d'esters.

5. Procédé selon l'une ou plusieurs des revendications précédentes, caractérisé en ce que les fines particules ont une taille allant de 1 à 50 µm.

6. Procédé selon l'une ou plusieurs des revendications précédentes, caractérisé en ce que les composés de couleur céramiques comprennent en plus un ou plusieurs additifs issus de la série des agents de modulation de la charge, des agents d'amélioration de la fluidité, des particules magnétiques et des particules support.

7. Procédé selon l'une ou plusieurs des revendications précédentes, caractérisé en ce que les moyens de transfert sont un support papier qui est revêtu de gomme arabique, d'acétate de polyvinyle ou de cire.

8. Procédé selon l'une ou plusieurs des revendications précédentes, caractérisé en ce que les compositions de couleur céramiques sont appliquées sur les moyens de transfert au moyen d'une imprimante laser.

9. Procédé selon l'une ou plusieurs des revendications précédentes, caractérisé en ce que les compositions de couleur céramiques sont appliquées sur les moyens de transfert en une épaisseur de couche de 0,1 mm - 3 mm, de préférence 0,3 mm - 0,6 mm.

10. Procédé selon une ou plusieurs des revendications précédentes, caractérisé en ce que les compositions de couleur céramiques sont fixées après transmission aux moyens de transfert, sans pression, avec application de chaleur.

11. Procédé selon l'une ou plusieurs des revendications précédentes, caractérisé en ce que, pour le procédé de reproduction électrophotographique, le rapport de mélange entre les compositions de couleur céramiques et le révélateur est réglé dans une plage comprise entre 30 % en poids et 80 % en poids d'agent de contraste.

12. Procédé selon l'une ou plusieurs des revendications précédentes, caractérisé en ce que les compositions de couleur céramiques sont fixées après application sur les moyens de transfert, à titre supplémentaire, au moyen d'un vernis transparent.

13. Procédé selon l'une ou plusieurs des revendications précédentes, caractérisé en ce que les compositions de couleur céramiques sont cuites à une température située dans la plage allant de 800 à 1500°C.

14. Objets céramiques ou vitreux décorés, obtenus suivant un procédé selon l'une des revendications 1 à 13 ci-dessus.

15. Composition de couleur céramique, caractérisé en ce qu'elle contient de fines particules, qui contiennent chacune des pigments céramiques, une ou des résines formant liant, et le cas échéant un ou plusieurs additifs issus de la série des agents de modulation de charge, des agents pour améliorer la fluidité, des particules support et des particules magnétiques, en ce que la quantité en poids des pigments céramiques dans la composition de couleur céramique est de 10 à 70 %, et en ce que les pigments céramiques constituent des noyaux de particule qui sont enveloppés par la ou les résines formant liant.

16. Composition de couleur céramique selon la revendication 15, caractérisée en ce que les pigments céramiques constituent des liaisons de type spinelle ou de type silicozirconate.

17. Composition de couleur céramique selon la revendication 15 ou 16, caractérisée en ce que la résine formant liant est constituée d'un ou plusieurs monomères de vinyle.

18. Composition de couleur céramique selon la revendication 17, caractérisée en ce que la résine formant liant est constituée de styrène ou de dérivés de celui-ci, seuls ou en combinaison avec d'autres monomères vinyle ou constituées de dérivés d'ester.

19. Composition de couleur céramique selon l'une ou plusieurs des revendications 15 à 18, caractérisée en ce que la taille de particule de la composition de couleur céramique est dans la plage allant de 1 à 50 µm.
